# EUROPÄISCHE PATENTANMELDUNG

(11) **EP 1 104 783 A1**
(43) Veröffentlichungstag der Anmeldung: **06.06.2001**
(21) Anmeldenummer: 99123692.8
(22) Anmeldetag: 29.11.1999
(51) Int. Cl.: C08L 29/14, C08K 5/103, D06N 3/04

(54) **Boden- oder Wandbelag**

(71) Anmelder: Dunlop Tech GmbH, 63450 Hanau/Main (DE)
(72) Erfinder: Seibert, Walter, 63486 Bruchköbel (DE); Neumann, Uwe, 60487 Frankfurt (DE); Steuer, Mike, 63457 Hanau (DE); Cierniak, Karl-Heinz, 63607 Wächtersbach (DE)
(74) Vertreter: Manitz, Finsterwald & Partner

(57) **Zusammenfassung**

Die Erfindung betrifft einen Boden- oder Wandbelag, bestehend aus einem Kunststoffanteil von 16 bis 50 Gewichts-%, der sich aus weichmacherfreiem Polyvinylbutyral und Ethylen-Vinylacetat-Copolymer zusammensetzt, aus einem auf den Kunststoffanteil bezogenen Weichmacheranteil von 10 bis 45 Gewichts-%, wobei der Weichmacher Glykolbenzoat ist, und aus Füll- und Hilfsstoffen als Rest. Bevorzugt enthält der Belag 15 bis 33 Gewichts-% Polyvinylbutyral und 1 bis 17 Gewichts-% Ethylen-Vinylacetat-Copolymer.

## Beschreibung

Die Erfindung betrifft einen Boden- oder Wandbelag hergestellt aus einer Mischung von Kunststoff, Füllstoffen und Hilfsstoffen.

Außer den bekannten PVC-Bodenbelägen sind auch bereits halogenfreie Bodenbeläge unter Verwendung von Polyvinylbutyral (PVB) vorgeschlagen worden.

PVB ist ein thermoplastisches Kunstharz, das nur aus den Elementen Kohlenstoff, Sauerstoff und Wasserstoff besteht und als Bindemittel in Bodenbelägen gut geeignet ist. PVB ist jedoch verglichen mit PVC wesentlich teurer, so daß aus wirtschaftlichen Gründen die Verwendung von PVB für Bodenbeläge im Regelfall nicht in Betracht kommt.

Um den Vorteil des PVB, halogenfrei zu sein, dennoch nützen zu können, wurde vorgeschlagen, recycliertes PVB zur Herstellung von Bodenbelägen und Wandplatten zu verwenden.

Aus der EP-A-0 471 658 ist die Verwendung von recycliertem, plastifiziertem PVB-Harz als Rohmaterialkomponente für die Herstellung von Fußbodenbelägen bekannt. Dem recyclierten, weichmacherhaltigen PVB-Harz kann noch ein anderes kompatibles Harz beigemischt werden. Als kompatible Harze werden eine Reihe von Materialien aufgezählt, unter anderem Polyethylvinylacetat. Bevorzugt wird als kompatibles Harz nicht plastifiziertes PVB verwendet. Nachteilig an diesem unter Verwendung von recycliertem PVB hergestellten Bodenbelag ist vor allem, daß das recyclierte PVB Weichmacher enthält, auf Grund derer es beim fertigen Bodenbelag zu Weichmachermigration kommt, was zu Verschmutzungsproblemen führt, da Schmutzteilchen am ausgeschwitzten Weichmacher haften. Das Ausschwitzen des Weichmachers führt auch zu einer unzureichenden Verklebung des Belages auf dem Untergrund. Außerdem können Belagplatten bei längerer Lagerung vor dem Verlegen zusammenhaften. Weitere Nachteile sind unangenehme Geruchseffekte, mangelnde Dimensionsstabilität sowie Unbeständigkeit gegenüber Reinigungsmitteln.

Aus der DE-A-4 202 948 ist die Verwendung von recycliertem, weichmacherhaltigem PVB zur Herstellung von Bodenbelägen bekannt, welche übliche Füllstoffe und Hilfsstoffe sowie 5 bis 20 % Polyacrylat enthalten. Auch bei diesen bekannten Bodenbelägen können die oben genannten Nachteile auftreten. Außerdem neigt dieses Material zur Versprödung.

Aus der DE-B-0 664 355 ist ein Boden- oder Wandbelag bekannt, der 8 bis 25 Gewichts-% weichmacherfreies, nicht-typengerechtes PVB, zusätzlich einen auf den PVB-Anteil bezogenen Weichmacheranteil im Bereich von 20 bis 70 Gew.-% sowie Füll- und Hilfsstoffe enthält. Als nicht-typengerechtes PVB wird Material von Fehlchargen und/oder aus der Abreinigung von Acetalisier-Reaktoren, Kaskaden und/oder Absetzgruben verwendet, das eine Viskosität unter 50 mPa s aufweist. Als Weichmacher werden Phthalat-Weichmacher verwendet. Das weichmacherfreie, nicht-typengerechte PVB kann mit Anteilen von recycliertem PVB verstreckt werden, wobei die Anteile so gewählt werden, daß der im recycliertem PVB enthaltene Weichmacher nicht störend wirkt. Dieses Material weist die oben genannten Nachteile nicht auf, muß aber wegen seiner zu geringen Flexibilität nach der Herstellung in Platten ausgestanzt werden, d.h. es eignet sich nicht als Bahnenware. Eine weitere Schwierigkeit besteht darin, daß die Schweißnähte wegen des niedrigen PVB-Anteils nicht halten und daß das übliche zur Herstellung von PVC-Belägen angewandte Verfahren nicht geeignet ist, sondern ein spezielles Herstellungsverfahren verwendet werden muß.

Aufgabe der vorliegenden Erfindung ist die Bereitstellung eines Boden- oder Wandbelags, der nicht nur keine Weichmachermigration aufweist, sondern auch als Bahnenware geeignet ist und sich in seinen Verlege- und Gebrauchseigenschaften nicht von denen eines PVC-Belags unterscheidet.

Gelöst wird diese Aufgabe ausgehend von einem Kunststoff, Füllstoffe und Hilfsstoffe enthaltenden Belag dadurch, daß er einen Kunststoffanteil von 16 bis 50 Gewichts-% enthält, der sich aus weichmacherfreiem Polyvinylbutyral und Ethylen-Vinylacetat-Copolymer zusammensetzt, daß er einen auf den Kunststoffanteil bezogenen Weichmacheranteil von 10 bis 45 Gewichts-% enthält und der Weichmacher Glykolbenzoat ist und daß er als Rest aus Füll- und Hilfsstoffen besteht.

Dieser Belag ist als Bahnenware geeignet und läßt sich so einfach verlegen wie PVC-Beläge, d.h. die Fugen lassen sich haltbar verschweißen, und der Belag läßt sich im Wandbereich gut zuschneiden. Dimensionsstabilität, Resteindruck und Verschleißfestigkeit und Stuhlrolleneignung entsprechen im wesentlichen denen von PVC-Belägen. Der Belag kann im späteren Gebrauch mit handelsüblichen Reinigungs- und Pflegemitteln behandelt werden. Ferner kann zu seiner Herstellung das übliche für PVC-Beläge verwendete Verfahren durchgeführt werden. Die Kosten sind nicht höher als bei dem aus der EP-B-0 664 355 bekannten Belag.

Als PVB kann weichmacherfreies, nicht-typengerechtes PVB verwendet werden, das aus Fehlchargen stammt und eine Viskosität nicht unter 50 mPa s (gemessen als 5 %ige n-Butanol-Lösung / 20°C nach Höppler, DIN 53015) aufweist. PVB aus Fehlchargen ist PVB-Material, das nicht der Spezifikation für den jeweiligen Verwendungszweck entspricht. Die Restfeuchte des nicht-typengerechten PVB liegt bevorzugt unter 1,5 Gewichts-%.

Als Ethylen-Vinylacetat-Copolymer wird vorzugsweise eines mit einem Vinylacetatanteil von 20 bis 35 Gewichts-%, insbesondere von 25 bis 32 Gewichts-% verwendet. Der Schmelzindex beträgt vorzugsweise 2,3 bis 2,7 (bei 190°C und 2,16 kg).

Der erfindungsgemäße Boden- oder Wandbelag enthält vorzugsweise 15 bis 33 Gewichts-% Polyvinylbutyral und 1 bis 17 Gewichts-% Ethylen-Vinylacetat-Copolymer. Besonders bevorzugt beträgt der Polyvinylbutyralanteil 20 bis 29 Gewichts-% und der Ethyl-Vinylacetat-Copolymeranteil 1 bis 15 Gewichts-%.

Der auf den Kunststoffanteil bezogene Weichmacheranteil beträgt vorzugsweise 15 bis 33 Gewichts-%.

Der Weichmacher Glykolbenzoat kann ein Glykolmonobenzoat oder Glykoldibenzoat sein, wobei Ethylen- und Propylenglykolbenzoate verwendet werden können. Bevorzugt sind Dipropylenglykoldibenzoat und/oder Diethylenglykoldibenzoat.

Als Füllstoffe können bei dem erfindungsgemäßen Belag herkömmliche Stoffe, wie Calciumcarbonat, Schwerspat, Talkum und Glimmer verwendet werden. Bevorzugt besteht der überwiegende Teil des Füllstoffs aus Kreide.

Als Hilfsstoffe kann der erfindungsgemäße Belag Fettsäuren, Metallseifen, Verstärkungsfasern, Pigmente und Antistatika enthalten. Zur flammfesten Ausrüstung können Aluminiumhydroxid, Magnesiumhydroxid oder eine Keramikpulvermischung, die von der Firma Nordmann, Rassmann GmbH & Co unter der Marke CEEPREE^{R} verkauft wird, verwendet werden. Der erfindungsgemäße Belag kann Magnesiumhydroxid in einer Menge bis zu 12 Gewichts-% enthalten, das gleichzeitig die Benetzbarkeit des Belags verbessert. Eine ähnliche Wirkung hat Aluminiumhydroxid. Der Belag enthält Verstärkungsfasern in einer Menge von 0 bis zu 6 Gewichts-%. Der Belag kann einen Gesamtanteil an Hilfsstoffen von 1 bis 17 Gewichts-% enthalten.

Zur Erhöhung der Maßstabilität und Festigkeit des Belags erfolgt vorzugsweise eine leichte Vernetzung des PVB durch Zusatz von Vernetzern, wie z.B. blockierten Isocyanaten, d.h. Isocyanaten, die erst bei Wärmeeinwirkung reagieren.

Die erfindungsgemäßen Boden- und Wandbeläge können auf üblichen Kalandern, wie sie für die Herstellung von Belägen aus PVC gebräuchlich sind, verarbeitet werden.

Die erfindungsgemäßen Boden- und Wandbeläge können auch aus mehreren Schichten aufgebaut sein. Dies wird durch Duplizieren oder Triplizieren solcher Schichten unter Druck und Temperatur erreicht. Hierbei besteht die Möglichkeit, die einzelnen Schichten unterschiedlich zu rezeptieren, um die Eigenschaften dieser Schichten ihren späteren Erfordernissen speziell anzupassen. In einer bevorzugten Ausführungsform besteht der erfindungsgemäße Belag aus zwei Schichten. Die Oberflächenschicht enthält weniger Füllstoff als die Unterschicht.

Im folgenden werden typische Rezepturen für einen ein- und einen zweischichtigen Belag gegeben.

Der einschichtige Belag hat folgende Zusammensetzung, wobei EVA Ethylen-Vinylacetat-Copolymer bedeutet.

| | |
|---|---|
| PVB | 20 bis 26 Gewichts-% |
| EVA | 1 bis 8 Gewichts-% |
| Mischung aus Diethylen- und Dipropylenglykoldibenzoat | 5 bis 11 Gewichts-% |
| Hilfsstoffe ohne Magnesiumhydroxid | 1 bis 5 Gewichts-% |
| Magnesiumhydroxid Rest Kreide | 2 bis 12 Gewichts-% |

Bei einem zweischichtigen Belag hat die Oberschicht folgende Zusammensetzung:

| | |
|---|---|
| PVB | 23 bis 29 Gewichts-% |
| EVA | 9 bis 15 Gewichts-% |
| Mischung aus Diethylen- und Dipropylenglykoldibenzoat | 5 bis 11 Gewichts-% |
| Hilfsstoffe ohne Magnesiumhydroxid | 1 bis 5 Gewichts-% |
| Magnesiumhydroxid Rest Kreide | 2 bis 12 Gewichts-% |

Die Unterschicht des zweischichtigen Belags hat dieselbe Zusammensetzung wie die des einschichtigen Belags.

## Patentansprüche

1. Boden- oder Wandbelag aus Kunststoff, Füllstoffen und Hilfsstoffen, dadurch gekennzeichnet, daß er einen Kunststoffanteil von 16 bis 50 Gewichts-% enthält, der sich aus weichmacherfreiem Polyvinylbutyral und Ethylen-Vinylacetat-Copolymer zusammensetzt, daß er einen auf den Kunststoffanteil bezogenen Weichmacheranteil von 10 bis 45 Gewichts-% enthält und der Weichmacher Glykolbenzoat ist und daß er als Rest aus Füll- und Hilfsstoffen besteht.

2. Boden- oder Wandbelag nach Anspruch 1, dadurch gekennzeichnet, daß er 15 bis 33 Gewichts-% Polyvinylbutyral und I bis 17 Gewichts-% Ethylen-Vinylacetat-Copolymer enthält.

3. Boden- oder Wandbelag nach Anspruch 2, dadurch gekennzeichnet, daß er 20 bis 29 Gewichts-% Polyvinylbutyral und 1 bis 15 Gewichts-% Ethylen-Vinylacetat-Copolymer enthält.

4. Boden- oder Wandbelag nach einem der Ansprüche 1 bis 3, dadurch gekennzeichnet, daß er als Polyvinylbutyral nicht-typengerechtes Polyvinylbutyral enthält, das weichmacherfreies Material aus Fehlchargen ist und eine Viskosität nicht unter 50 mPa s (gemessen als 5 %ige n-Butanol-lösung / 20°C nach Höppler, DIN 53015) aufweist.

5. Boden- oder Wandbelag nach Anspruch 4, dadurch gekennzeichnet, daß die Restfeuchte des nicht-typengerechten Polyvinylbutyral unter 1,5 Gewichts-% liegt.

6. Boden- oder Wandbelag nach einem der Ansprüche 1 bis 5, dadurch gekennzeichnet, daß das Ethylen-Vinylacetat-Copolymer einen Vinylacetatanteil von 25 bis 32 Gewichts-% enthält.

7. Boden- oder Wandbelag nach einem der Ansprüche 1 bis 6, dadurch gekennzeichnet, daß er zweischichtig ausgebildet ist.

8. Boden- oder Wandbelag nach Anspruch 7, dadurch gekennzeichnet, daß die Oberflächenschicht 32 bis 44 Gewichts-% Kunststoffanteil und die Unterschicht 21 bis 34 Gewichts-% Kunststoffanteil enthält.

9. Boden- oder Wandbelag nach einem der Ansprüche 1 bis 8, dadurch gekennzeichnet, daß er einen auf den Kunststoffanteil bezogenen Weichmacheranteil von 15 bis 33 Gewichts-% enthält.

10. Boden- oder Wandbelag nach einem der Ansprüche 1 bis 9, dadurch gekennzeichnet, daß der überwiegende Teil des Füllstoffs Calciumcarbonat ist.
